# Europäisches Patentamt

# European Patent Office

# Office européen des brevets

(11) Veröffentlichungsnummer: **0 571 758 A2**

## EUROPÄISCHE PATENTANMELDUNG

(21) Anmeldenummer: **93106453.9**

(22) Anmeldetag: **21.04.93**

(51) Int. Cl.5: **H02P 8/00**

(30) Priorität: **27.05.92 DE 4217556**

(43) Veröffentlichungstag der Anmeldung:
**01.12.93 Patentblatt 93/48**

(84) Benannte Vertragsstaaten:
**DE ES FR GB IT**

(71) Anmelder: **ROBERT BOSCH GMBH**
**Postfach 30 02 20**
**D-70442 Stuttgart(DE)**

(72) Erfinder: **Dietz, Günter**
**Aich 25a**
**W-8806 Neuendettelsau(DE)**

(54) **Mikroschrittsteuerung für einen Schrittmotor.**

(57) Es wird ein Verfahren und eine Schaltungsanordnung zur Ansteuerung eines Permanent-Schrittmotors vorgeschlagen, der mit einer pulsbreitenmodulierten Wechselspannung angesteuert wird. Durch die verwendete Wechselspannung wird der Einfluß der magnetische Remanenz des Motors verringert, so daß sich ein besserer Rundlauf ergibt.

Fig. 1

EP 0 571 758 A2

## Stand der Technik

Die Erfindung geht aus von einem Verfahren Zur Ansteuern eines Schrittmotors, insbesondere eines Pemanentmagnet-Schrittmotors nach der Gattung des Hauptanspruchs. Es ist schon bekannt, einen Schrittmotor derart anzusteuern, daß seine Drehbewegung aus vielen Mikroschritten zusammengesetzt wird. Beispielsweise gibt es von SGS die Steuerschaltung L6217A als integrierte Schaltung, bei der durch Änderung des Tastverhältnisses zwischen Stromimpuls und Pausenzeit im arithmetischen Mittel ein Stromfluß in den Erregerspulen des Schrittmotors bewirkt wird, so daß dieser anlaufen kann. Allerdings werden zum Ansteuern des Schrittmotors nur positive Stromimpulse verwendet. In der Praxis hat sich gezeigt, daß bei getakteter Stromsteuerung des Schrittmotors die Schrittwinkelverstellung im Mikroschrittbetrieb, insbesondere beim Polaritätswechsel in einer Phase, große Schrittwinkelfehler verursacht. Dies wird vor allem durch die dann dominierende Remanenz (gespeicherte Magnetfeldstärke) in den Statorblechen verursacht. Desweiteren ergeben sich durch die gepulste Ansteuerung der Stromquelle insbesondere im Chopperbetrieb Störimpulse, die die präzise Funktion der analogen Schaltungsteile beeinträchtigen können.

## Vorteile der Erfindung

Bei dem erfindungsgemäßen Verfahren ergibt sich durch die Ansteuerung des Motors mit einem gepulsten Wechselstrom der Vorteil, daß in jeder beliebigen Ansteuerphase die Restremanenz ihren Einfluß verliert. Dadurch verringert sich der durch das Hysterese-Magnetfeld bedingte Schrittwinkelfehler. Besonders vorteilhaft aber ist, daß der Motor einen besseren Rundlauf erreicht, der dem eines Universalmotors angenähert ist.

Durch die in den abhängigen Ansprüchen aufgeführten Maßnahmen sind vorteilhafte Weiterbildungen und Verbesserungen des in den unabhängigen Ansprüchen angegebenen Verfahrens bzw. der Steuerschaltung möglich. Besonders vorteilhaft ist, daß die durch das Tastverhältnis vorgegebene Ansteuerkurve für den gepulsten Strom so ausgebildet ist, daß der Motorstrom im Mittel in etwa eine Sinuskurve ergibt, die Ansteuerung besonders gut einem Universalmotor angepaßt ist und so ein besonders guter Rundlauf entsteht.

Als vorteilhaft ist auch anzusehen, daß die Taktfrequenz des gepulsten Wechselstromes oberhalb der Hörschwelle liegt und dadurch keine Steuerfrequenzen des Motors hörbar sind.

Eine sehr einfache Lösung zur Vorgabe des Ansteuerstromes ist durch Werte gegeben, die in einer Tabelle gespeichert sind. Dadurch können die Werte für die Ansteuerkurve auf einfache Weise beliebig variiert werden und besonders leicht auf einen bestimmten Motortyp angepaßt werden.

Weitere vorteilhafte Maßnahmen und Verbesserungen der Erfindung sind der Beschreibung entnehmbar.

## Zeichnung

Zwei Ausführungsbeispiele der Erfindung sind in der Zeichnung dargestellt und in der nachfolgenden Beschreibung näher erläutert. Es zeigt Figur 1 ein Blockschaltbild für ein erstes Ausführungsbeispiel, Figur 2 den Aufbau eines Pulsbreitmodulators, Figur 3 zeigt das Blockschaltbild eines zweiten Ausführungsbeispiels und Figur 4 verschiedene Diagramme.

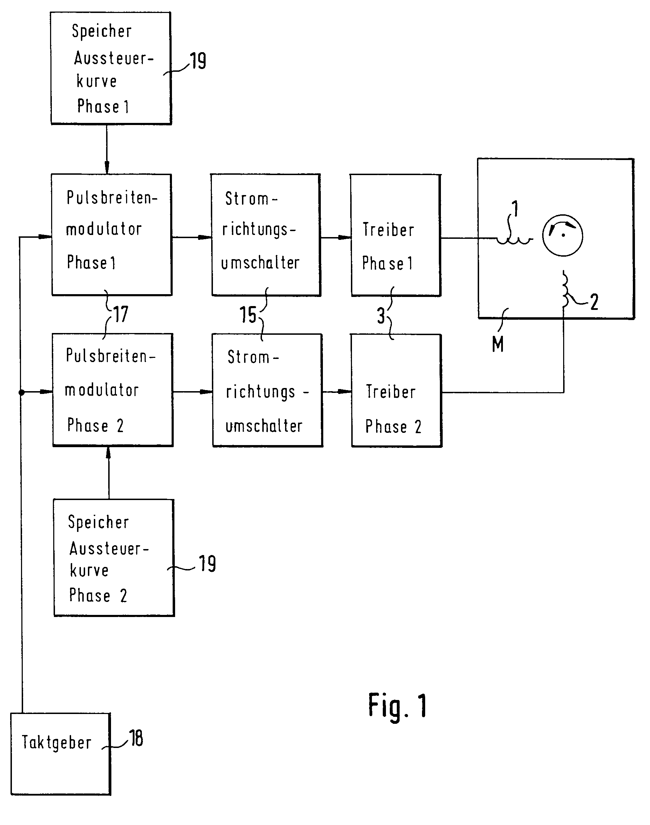

Ein erstes Ausführungsbeispiel der Erfindung ist in dem Blockschaltbild der Figur 1 dargestellt. Ein Motor M mit einem Permanentmagneten als Rotor (PM-Motor) hat zwei um 90° zur Drehachse des Motors angeordnete Spulen 1, 2. Die Spulen sind mit zwei zugeordneten Treibern 3 verbunden. Der Eingang des jeweiligen Treibers 3 ist mit einem Stromrichtungsumschalter 15 verbunden. Die beiden Stromrichtungsumschalter 15 werden von zugeordenten Pulsbreitenmodulatoren 17 gesteuert, die mit je einem Speicher 19 und mit einem Taktgeber 18 verbunden sind. Die beiden Speicher 19 enthalten die Ansteuerkurven für den Schrittmotor.

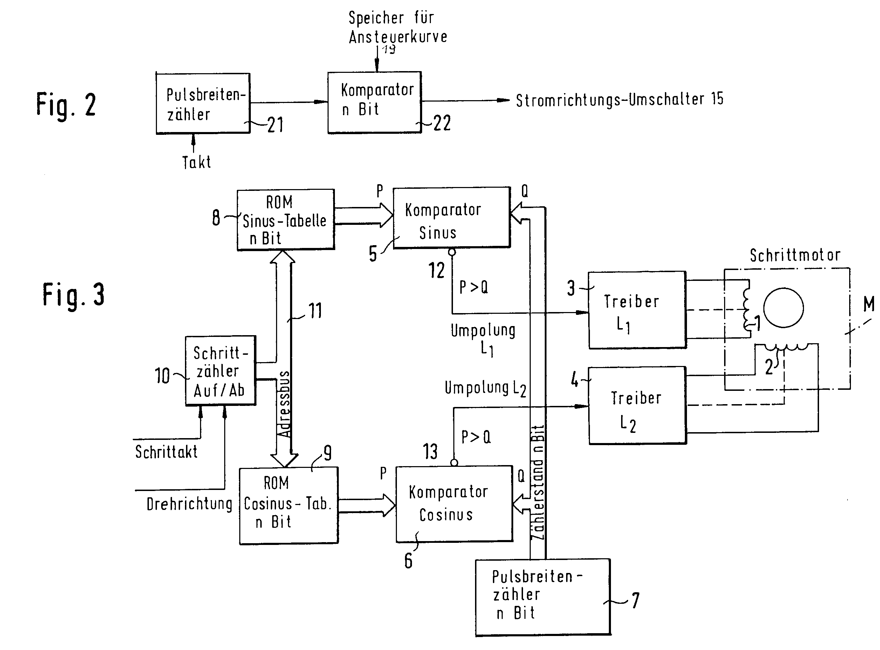

Figur 2 zeigt den prinzipiellen Aufbau des Pulsbreitenmodulators 17. Der Pulsbreitenmodulator weist im wesentlichen einen Pulsbreitenzähler 21 auf, dessen Ausgang mit dem Eingang eines Komparators 22 verbunden ist. Der Komparator 22 steuert in Abhängigkeit vom Komparatorergebnis den Umschalter 15, dessen Ausgänge über einen Treiber die beiden Spulen 1, 2 bestromen. Der Pulsbreitenzähler 21 weist im wesentlichen einen digitalen Zähler auf, der von dem Taktgeber 18 getriggert wird. Die Taktfrequenz beträgt beispielsweise 16 kHz x $2^n$, wobei n die Busbreite des digital codierten Stromes darstellt. Der Komparator 22 ist so ausgebildet, daß er entsprechend der Busbreite die n-Bit der Dateninformation verarbeiten kann. Der Komparator 22 entnimmt seine Referenzwerte für die Ansteuerkurve des Motorstroms dem Speicher 19 und steuert in Abhängigkeit von seinem Ausgang den Umschalter 15.

Bei dem zweiten Ausführungsbeispiel gemäß der Figur 3 ist für jede Motorspule 1, 2 ein Pulsbreitenmodulator vorgesehen, wobei jeder Pulsbreitenmodulator auf einen getrennten Treiber 3, 4 wirkt, die wiederum mit den einzelnen Spulen 1, 2 des Motors M verbunden sind. Jeder Pulsbreitenmodulator weist einen als ROM ausgebildeten Speicher 8, 9 auf. In dem ROM 8 sind Werte für die Sinuskurve entsprechend der Bitzahl eines Adressbusses 11 in Tabellenform gespeichert. Im ROM 9 sind entsprechende Werte für eine Kosinus-Tabelle gespeichert. Die beiden ROM's 8, 9 sind über entsprechende Datenleitungen mit den Komparatoren 5, 6 verbunden, so daß die entsprechenden Steuerfunktionen für die Treiber 3, 4 am Ausgang 12, 13 anstehen. Die beiden Komparatoren 5, 6 werden von einem Pulsbreitenzähler 7 entsprechend dem ersten Ausführungsbeispiel gesteuert. Damit die Sinus- bzw. Kosinussteuerfunktion synchron an den Spulen 1, 2 anliegt, werden beide ROM's 8, 9 von einem Schrittzähler 10 synchron über den Adressbus 11 getaktet. Der Schrittzähler selbst ist als Vorwärts- oder Rückwärtszähler ausgebildet und wird von dem Taktgeber entsprechend dem ersten Ausführungsbeispiel getriggert. Je nach Zielrichtung kann dabei der Schrittakt und die Drehrichtung für den Motor vorgegeben werden.

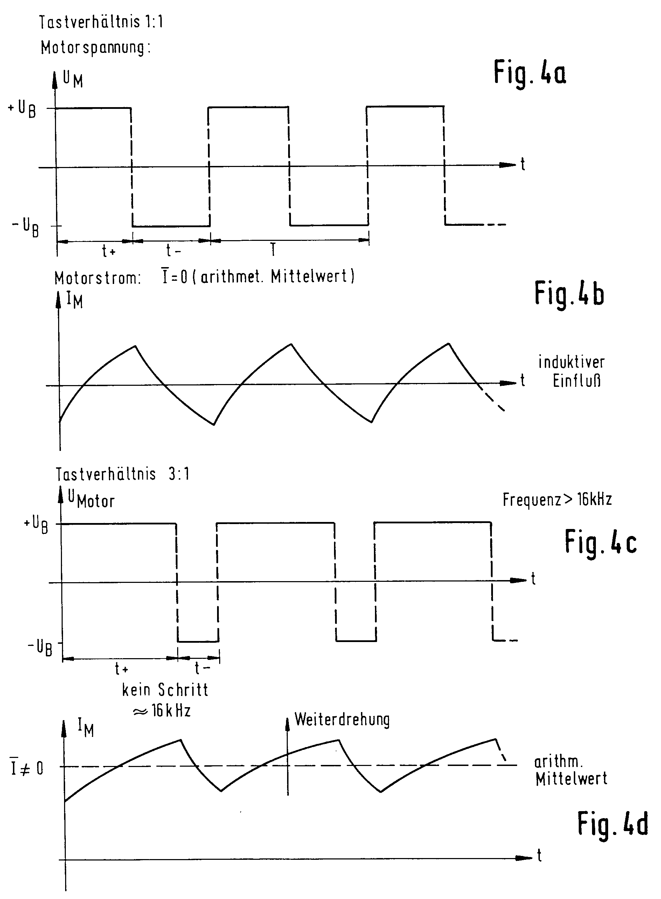

Im folgenden wird die Funktionsweise der Erfindung zunächst anhand der Figur 4 näher erläutert. In dem Diagramm 4a ist in dem Achsenkreuz mit der x-Achse als Zeitachse und der y-Achse als Spannungsachse die Motorspannung dargestellt. Nach bestimmten Zeitabschnitten $t^+$ oder $t^-$ wird die Motorspannung von einem positiven Wert $U^B$ auf einen negativen Wert $-U^B$ alternativ umgeschaltet. Die Periodendauer T der umgeschalteten Motorspannung setzt sich also aus einem positiven Spannungsimpuls $t^+$ und einem negativen Spannungsimpuls $t^-$ zusammen. Entsprechend würde - bedingt durch den Widerstand des Motors - ein entsprechender positiver und negativer Strom in den Motor fließen. Dieser Motorstrom ist unter Berücksichtigung der Induktivitäten des Motors und der damit verbundenen Ladezeitkonstanten bzw. Entladenzeitkonstanten in Figur 4b dargestellt. Bei einem Tastverhältnis $t^+/t^-$ von 1:1, wie in Figur 4a dargestellt, würde der arithmetische Mittelwert des Motorstromes $I^M$ gemäß der Figur 4b den Wert Null annehmen. Wird dagegen entsprechend der Figur 4c das Tastverhältnis beispielsweise auf den Wert 3:1 geändert, d.h. die Zeit des an dem Motor anliegenden Spannungsimpulses $U^M$ ist dreimal so lang wie der negative Spannungsimpuls $U^M$, dann wird im arithmetischen Mittel entsprechend der Figur 4d ein positiver Strom $I^M$ fließen, der von einem Wechselstromanteil überlagert ist. Dieser überlagerte Wechselstromanteil sowie seine sich aus dem Rechteckimpuls ergebenden Oberwellen ist bei jedem gewählten Tastverhältnis vorhanden, insbesondere auch dann, wenn das Tastverhältnis 1:1 beträgt (Figur 4b). Daraus ergibt sich der Vorteil, daß auch in Nullpunknähe eine Entmagnetisierung des Schrittmotors erreicht wird und auch in diesem Fall der Einfluß der magnetischen Remanenz verringert wird. Vergleichsweise wird beim Stand der Technik dieser Effekt nicht erreicht. Zur Ansteuerung des Schrittmotors mit der gepulsten Wechselspannung bzw. dem gepulsten Wechselstrom wird nun entsprechend den in dem Speicher 19 oder den ROM's 8, 9 gespeicherten Tabellen das Tastverhältnis kontinuierlich geändert, so daß ein sich ständig ändernder Strom im Schrittmotor fließt. Dabei setzt sich die Drehung des Motors aus vielen Mikroschritten mit entsprechend getakteten Stromimpulsen zusammen. Beispielsweise werden für eine Umdrehung der Motorwelle in einer Sekunde 3600 Mikroschritte benötigt. Die 3600 Mikroschritte werden durch insgesamt sechs Sinusperioden erzeugt, wobei jede Sinusperiode durch 600 einzelne Änderungen des Tastverhältnisses erzeugt wird. Dies Sinusperioden sollen dabei dem sinusförmigen Ansteuerstrom des Motors entsprechen. Bei der genannten Drehgeschwindigkeit von einer Umdrehung pro Sekunde und 3600 Mikroschritten pro Umdrehung ergibt sich pro Mikroschritt eine Zeit von etwa 280 MSek. Wird eine Steuerfrequenz für den Stromrichtungsumschalter 15 von 16 kHz angenommen, dann werden etwa 4,5 Impulswechsel an die Motorspulen 1, 2 gegeben, bevor das Tastverhältnis wieder geändert wird. Nach diesen 4,5 Wechseln erfolgt die nächste Änderung des Tastverhältnisses entsprechend der in den Speichern 19 bzw. ROMs 8, 9 abgelegten Daten. Der Strom in den Motorspulen 1, 2 verläuft dann etwa sinusförmig.

Die Werte für die gespeicherten Tabellen sind entweder rechnerisch nach der Sinus- bzw. Konsinusfunktion oder auch meßtechnisch herleitbar.

Die Stromrichtungsumschalter 15 schalten die Polarität der Stromimpulse kontinuierlich um, so daß sich ein gepulster Wechselstorm ergibt. Die Stromrichtungsumschalter 15 enthalten beispielsweise zwei gegeneinandergeschaltete Schalttransistoren, die im Leistungspfad mit einer positiven bzw. negativen Stromquelle verbunden sind. Durch alternierendes Ansteuern der Schalttransistoren fließen die entsprechenden positiven und negativen Stromimpulse.

Als Treiber 3 können entsprechende Halbleiterschalter wie Transistoren oder Thyristoren verwendet werden. Es sei noch ergänzt, daß der Pulsbreitenmodulator nach Figur 2 nur für einen Spulenstrang dargestellt ist.

Das erfindungsgemäße Verfahren bzw. Steuerschaltung hat den Vorteil, daß der Motor immer an der Betriebsspannung liegt, während der Spulenstrom durch ständiges schnelles Umpolen der Spulen gesteuert wird. Eine Regelung für den Strom ist nicht erforderlich.

Durch Anpassung der Periodendauer T, der Ansteuerspannung und der Zeitkonstanten, die sich aus der Motorspule mit dem Vorwiderstand ergibt, kann auf einfache Weise die Amplitude des Wechselstromes durch die Spulen eingestellt werden.

Dadurch kann sowohl die Entmagnetisierung als auch der Hystereseverlust des speziellen Bedürfnissen der Anwendung des Schrittmotors angepaßt werden. Durch Ausnutzung des Tiefpaßverhaltens des Schrittmotors als elektromechanischer Wandler kann die getaktete Ansteuerspannung in den Spulen 1, 2 des Schrittmotors M in einen analogen Spulenstrom umgewandelt werden. Ein Digital-Analogwandler ist nicht erforderlich.

Beim zweiten Ausführungsbeispiel gemäß der Figur 3 werden zur Erzeugung der pulsbreitenmodulierten Spannungen die digital codierten Stromwerte auf je einen n-Bit-Komparator 5, 6 gegeben und mit dem Zählerstand eines freilaufenden Zählers 7 verglichen. Um den Schaltungsaufbau zu vereinfachen, steuert er alle Komparatoren an.

Bei einer Mikrocomputersteuerung mit einem 8-Bit-Bus wird ein entsprechender 8-Bit-Komparator mit einem Sollwert von z.B. 128 belegt. Der Pulsbreitenzähler 7 beginnt am Eingang Q des Komparators 5, 6 bei Null zu zählen. Der Ausgang 12, 13 des Komparators 5, 6 bleibt für die 128 Takte auf low. Für die nächsten 128 Takte wird er auf high geschaltet. Das Tastverhältnis am Ausgang 12, 13 ist genau 1:1.

Dieser Ausgang wird zur Umschaltung der Motorspannung verwendet. Der Motorstrom (stehender Motor) wird also für dieses Beispiel bei einer Busbreite von 8 Bit mit dem Strom:

$$I = \frac{U}{(R+R_v)} * \frac{Data}{128}$$

mit $-127 \leq Data \leq 127$.

R = Widerstand der Motorwicklung
$R_v$ = Vorwiderstand.

Die Berechnung der Ansteuerkurven erfolgt für eine reine Sinuskurve bei 8 Bit Busbreite und 128 Mikroschritten pro Vollschritt:

$I_{L1} = 128 + 127 * \sin(2* * n/511)$.
$0 \leq n \leq 511$

n = Nummer des Mikroschritts
Die Taktfrequenz für den Pulsbreitenmodulator wird so hoch gewählt, daß ein eventuell auftretendes Pfeifen des Motors oberhalb der Hörschwelle von ca. 16 kHz liegt.

**Patentansprüche**

1. Verfahren zum Ansteuern eines Permanentmagnet-Schrittmotors, der von einem gepulsten Strom einer vorgegebenen Frequenz zur Bildung von Mikroschritten mit veränderlichem Tastverhältnis angesteuert wird, dadurch gekennzeichnet, daß der gepulste Strom abwechselnd mit einem positiven und einem negativen Stromimpuls als Wechselstrom kontinuierlich umgeschaltet und jedem Spulenpaar (1, 2) des Schrittmotors (M) zugeführt wird.

2. Verfahren nach Anspruch 1, dadurch gekennzeichnet, daß die durch das Tastverhältnis vorgegebene Ansteuerkurve für den gepulsten Strom so ausgebildet ist, daß der in den Spulen (1, 2) des Schrittmotors (M) fließende Strom im Mittel in etwa als Sinuskurve oder Kosinuskurve ausgebildet ist.

3. Verfahren nach Anspruch 2, dadurch gekennzeichnet, daß die Daten für die Ansteuerkurve des gepulsten Stromes einer gespeicherten Tabelle entnehmbar sind.

4. Verfahren nach einem der vorhergehenden Ansprüche, dadurch gekennzeichnet, daß die Taktfrequenz des Stromes oderhalb der Hörschwelle liegt.

5. Steuerschaltung zur Durchführung des Verfahrens nach Anspruch 1, dadurch gekennzeichnet, daß die Steuerschaltung einen Pulsbreitenmodulator (17) aufweist, daß der Pulsbreitenmodulator (17) einen Stromrichtungsumschalter (15) nach vorgegebenen Werten steuert, die in einem Speicher (19) abgelegt sind und daß der Ausgang des Stromrichtungsumschalters (15) über wenigstens einen Treiber (3, 4) mit dem Schrittmotor (M) verbunden ist.

| Speicher Aussteuer- kurve Phase 1 | 19 |

Pulsbreiten- modulator Phase 1 — 17

Strom- richtungs- umschalter — 15

Treiber Phase 1 — 3

M

1

2

Pulsbreiten- modulator Phase 2

Strom- richtungs- umschalter

Treiber Phase 2

Speicher Aussteuer- kurve Phase 2 — 19

Taktgeber — 18

Fig. 1

Speicher für
Ansteuerkurve
19

**Fig. 2**

Pulsbreiten-zähler  21  →  Komparator n Bit  22  →  Stromrichtungs-Umschalter 15

Takt

**Fig. 3**

ROM Sinus-Tabelle n Bit  8

Komparator Sinus  5

P    Q

12    P > Q

Umpolung L₁

Schritt-zähler Auf/Ab  10

11

Adressbus

Schrittakt

Drehrichtung

ROM Cosinus-Tab. n Bit  9

Komparator Cosinus  6

P    13    Q

P > Q

Umpolung L₂

Zählerstand n Bit

Treiber L₁  3

Treiber L₂  4

Schrittmotor

1

2

M

Pulsbreiten-zähler n Bit  7

EP 0 571 758 A2

6

Tastverhältnis 1:1
Motorspannung:

**Fig. 4a**

Motorstrom:  $\bar{I} = 0$ (arithmet. Mittelwert)

**Fig. 4b**

induktiver
Einfluß

Tastverhältnis  3:1

Frequenz > 16kHz

**Fig. 4c**

kein Schritt
≈ 16 kHz

Weiterdrehung

$\bar{I} \neq 0$

arithm.
Mittelwert

**Fig. 4d**

7